(19) Europäisches Patentamt
European Patent Office
Office européen des brevets

(11) Veröffentlichungsnummer: **0 192 118 B1**

# (12) EUROPÄISCHE PATENTSCHRIFT

(45) Veröffentlichungstag der Patentschrift: **03.07.91**

(21) Anmeldenummer: **86101408.2**

(22) Anmeldetag: **04.02.86**

(51) Int. Cl.5: **A01N 25/08**, A01N 57/30, A01N 57/14, //(A01N57/30, 47:22),(A01N57/14,47:22)

## (54) Kombinations-Trägergranulate.

(30) Priorität: **16.02.85 DE 3505424**

(43) Veröffentlichungstag der Anmeldung: **27.08.86 Patentblatt 86/35**

(45) Bekanntmachung des Hinweises auf die Patenterteilung: **03.07.91 Patentblatt 91/27**

(84) Benannte Vertragsstaaten: **AT BE CH DE FR GB IT LI NL**

(56) Entgegenhaltungen:
**DE-A- 2 939 746**
**GB-A- 1 015 933**
**GB-A- 1 305 320**
**US-A- 3 137 618**

**CHEMICAL PATENTS INDEX, BASIC ABSTRACTS JOURNAL, Section C, Week C/13, 21. Mai 1980, Derwent Publications Ltd, London, GB; & JP-A-80 008 481 (KUMIAI CHEMICAL INDUSTRIE K.K.)**

**CHEMICAL ABSTRACTS, Band 101, Nr. 25, 17. Dezember 1984, Seite 274, Zusammenfassung Nr. 224833r, Columbus, Ohio, US; & CS-A-217 457 (E. BESKA et al.) 15-05-1984**

(73) Patentinhaber: **BAYER AG**

**W-5090 Leverkusen 1 Bayerwerk(DE)**

(72) Erfinder: **Mölls, Hans-Heinz, Dr.**
**Westerwaldstrasse 29**
**W-6348 Herborn(DE)**
Erfinder: **Schrader, Jörn, Dipl.-Ing.**
**Walter-Kollo-Strasse 8**
**W-4019 Monheim(DE)**
Erfinder: **Krauthausen, Edmund, Dr.**
**Franz-Grillparzer-Ring 4**
**W-5000 Köln 71(DE)**
Erfinder: **Homeyer, Bernhard, Dr.**
**Obere Strasse 28**
**W-5090 Leverkusen 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die vorliegende Erfindung betrifft neue Kombinations-Trägergranulate, die feste und flüssige biozide Wirkstoffe enthalten. Ferner betrifft die Erfindung ein Verfahren zur Herstellung der neuen Kombinations-Trägergranulate und deren Verwendung.

Es sind bereits zahlreiche Trägergranulate bekannt, die feste oder flüssige biozide Wirkstoffe auf einem körnigen Trägermaterial enthalten (vgl. Büchel "Pflanzenschutz und Schädlingsbekämpfung", Georg Thieme Verlag, Stuttgart 1977, Seiten 198 und 199, GB-A-1305320, GB-A-1015933).

So lassen sich Trägergranulate mit festen Wirkstoffen zum Beispiel dadurch herstellen, daß man die aktiven Komponenten gegebenenfalls im Gemisch mit Zusatzstoffen in fein verteilter Form mit Hilfe von Klebemitteln auf der kompakten Oberfläche des Trägermaterials fixiert. Nachteilig ist jedoch, daß flüssige Wirkstoffe nicht nach dieser Methode auf Trägermaterialien aufgebracht werden können, da die bekannten Kleber in Gegenwart flüssiger Wirkstoffe nicht härten.

Trägergranulate, die flüssige herbizide Wirkstoffe enthalten, lassen sich zum Beispiel dadurch zubereiten, daß man poröse oder sorptive Trägermaterialien mit flüssigen Wirkstoffen oder mit Lösungen flüssiger Wirkstoffe in geeigneten Solventien, jeweils gegebenenfalls im Gemisch mit Zusatzstoffen, tränkt. Zwar lassen sich Trägergranulate, die sowohl feste als auch flüssige biozide Wirkstoffe enthalten, herstellen, indem man poröse bzw. sorptive Trägermaterialien mit Lösungen aus festen und flüssigen Wirkstoffen sowie gegebenenfalls Zusatzstoffen in geeigneten Solventien, soweit derartige Solventien auffindbar sind, tränkt. Die Eigenschaften dieser Granulate sind aber nicht immer befriedigend. Unter anderem kommt es nämlich, bedingt durch ein Auskristallisieren der festen Wirkstoffe, häufig zu einer Verstopfung der Poren bzw. Kapillaren des Trägermaterials, so daß die aktiven Komponenten am Einsatzort nicht in der gewünschten Weise freigesetzt werden.

Es wurden nun neue Kombinations-Trägergranulate gefunden, die

- körniges Trägermaterial mit kompakter Oberfläche und eine Hüllschicht aus.
- mindestens einen festen bioziden Wirkstoff.
- mindestens einen flüssigen bioziden Wirkstoff,
- Polyvinylacetat und Polyvinylalkohol sowie gegebenenfalls Zusatzstoffe

enthalten.

Weiterhin wurde gefunden, daß sich die erfindungsgemäßen Kombinations-Trägergranulate dadurch herstellen, daß man

- körniges Trägermaterial mit kompakter Oberfläche in einem Mischer mit einer wäßrigen Dispersion von Polyvinylacetat und Polyvinylalkohol besprüht.
- dann mit mindestens einem festen bioziden Wirkstoff, mindestens einem flüssigen bioziden Wirkstoff, gegebenenfalls Zusatzstoffen und gegebenenfalls einer wäßrigen Dispersion von Polyvinylacetat und Polyvinylalkohol besprüht und
- die so erhaltenen körnigen Produkte trocknet.

Schließlich wurde gefunden, daß sich die erfindungsgemäßen Kombinations-Trägergranulate je nach den enthaltenen aktiven Komponenten für verschiedenste Zwecke in der Landwirtschaft und im Gartenbau verwenden lassen.

Es ist als äußerst überraschend zu bezeichnen, daß die erfindungsgemäßen Kombinations-Trägergranulate eine bessere Wirksamkeit zeigen als vorbekannte Granulate, bei denen feste und flüssige Wirkstoffe in Form einer Lösung auf poröse oder sorptive Trägermaterialien aufgezogen sind. Unerwartet ist auch, daß die erfindungsgemäßen Produkte unter Praxisbedingungen beständig sind. Aufgrund des bekannten Standes der Technik war nämlich anzunehmen, Trägergranulate mit flüssigen Wirkstoffen notwendigerweise poröse oder sorptive Trägermaterialien enthalten müßten.

Die erfindungsgemäßen Kombinations-Trägergranulate zeichnen sich durch eine Reihe von Vorteilen aus. So wird durch diese Produkte eine problemlose gemeinsame Ausbringung von festen und flüssigen bioziden Wirkstoffen ermöglicht. Ferner werden die in diesen Granulaten enthaltenen aktiven Komponenten in der jeweils gewünschten Weise an ihrem Einsatzort freigesetzt. Darüberhinaus handelt es sich bei den erfindungsgemäßen Kombinations-Trägergranulaten um Produkte, die sich durch eine sehr hohe Abriebfestigkeit auszeichnen.

Die erfindungsgemäßen Produkte werden im vorliegenden Fall als Kombinations-Trägergranulate bezeichnet, da sie feste und flüssige biozide Wirkstoffe in Kombination miteinander enthalten.

Als Trägermaterialien können in den erfindunsgemäßen Kombinations-Trägergranulaten alle üblichen in derartigen Granulaten enthaltenen körnigen Trägerstoffe mit kompakter Oberfläche vorhanden sein. Vorzugsweise in Betracht kommen Calcit, Dolomit und Sand, wie z.B. Quarzsand.

Der mittlere Teilchendurchmesser der Trägermaterialien kann innerhalb eines bestimmten Bereiches

variiert werden. Im allgemeinen liegt der mittlere Teilchendurchmesser zwischen 0,1 und 3 mm, vorzugsweise zwischen 0,3 und 1 mm.

Unter bioziden Wirkstoffen sind im vorliegenden Fall alle üblicherweise im Pflanzenschutz verwendbaren Wirkstoffe zu verstehen. Hierzu gehören vorzugsweise Insektizide, Akarizide, Nematizide, Fungizide, Herbizide und Pflanzenwachstumsregulatoren.

Die erfindungsgemäßen Granulate enthalten mindestens einen bei Raumtemperatur festen und mindestens einen bei Raumtemperatur flüssigen bioziden Wirkstoff.

Als bei Raumtemperatur feste biozide Wirkstoffe kommen vorzugsweise Carbamate in Frage. Beispielhaft genannt seien:

2-Isopropoxy-phenyl-N-methyl-carbamat
2,3-Dihydro-2,2-dimethyl-7-benzofuranyl-N-methyl-cabamat
(3,5-Dimethyl-4-methylthio-phenyl)-N-methyl-carbamat
(Naphthyl-1-yl)-N-methyl-carbamat.

Als bei Raumtemperatur flüssige biozide Wirkstoffe kommen vorzugsweise Phosphorsäure-Derivate in Betracht. Beispielhaft genannt seien:

O,O-Diethyl-O-(4-nitro-phenyl)-thionophosphorsäureester
O,O-Dimethyl-O-(4-nitro-phenyl)-thionophosphorsäureester
O-Ethyl-O-(4-methylthio-phenyl)-S-propyl-dithiophosphat
(O,O-Diethyl-thionophosphoryl)-α-oximinophenylessigsäurenitril
O,O-Diethyl-O-(3-chlor-4-methyl-7-cumarinyl)-thiophosphat
S-[1,2-Bis-(ethoxycarbonyl)-ethyl]-O,O-dimethyl-dithiophosphorsäureester
O,O-Dimethyl-O-(4-methylmercapto-3-methyl-phenyl)-thionophosphorsäureester
O-Ethyl-O-(2-isopropyloxycarbonyl-phenyl)-N-isopropylthionophosphorsäureesteramid.

Als Bindemittel fungiert in den erfindungsgemäßen Kombinations-Trägergranulaten ein Gemisch aus Polyvinylacetat und Polyvinylalkohol.

Als Zusatzstoffe, die in den erfindungsgemäßen Kombinations-Trägergranulaten vorhanden sein können, kommen Streckmittel, Mahlhilfsmittel, Farbstoffe sowie Wasser und organische Solventien in Frage.

Hierbei kommen als Streckmittel vorzugsweise feinkörnige anorganische Feststoffe in Frage, wie natürliche Gesteinsmehle, z.B. Kaoline, Tonerden, Talkum, Kreide, Quarzpulver, Attapulgit, Montmorillonit, Sepiolith oder Diatomeenerde, ferner synthetische Gesteinsmehle, wie hochdisperse Kieselsäure.

Als Mahlhilfsmittel kommen alle üblichen für diesen Zweck verwendbaren Stoffe in Betracht. Vorzugsweise genannt seien Kaoline, Tonerden, Talkum, Kreide und Quarzpulver.

Als Farbstoffe. die als Zusatzstoffe in Betracht kommen, seien anorganische Pigmente, wie Eisenoxid, Titandioxid, Ferrocyanblau, und organische Farbstoffe, wie Anthrachinon-, Azo- und Metallphthalocyaninfarbstoffe genannt.

Als organische Solventien kommen alle üblicherweise für die Herstellung von Trägergranulaten verwendbaren organischen Solventien in Frage. Vorzugsweise in Betracht kommen niedrig siedende organische Solventien, wie Methanol, Ethanol, Butanol und Methylenchlorid.

Die erfindungsgemäßen Granulate bestehen aus körnigen Trägermaterialien, auf deren kompakter Oberfläche sich eine umhüllende Schicht befindet, die mindestens einen festen bioziden Wirkstoff und mindestens einen flüssigen bioziden Wirkstoff sowie ein als Bindemittel wirkendes Gemisch aus Polyvinylacetat und Polyvinylalkohol und gegebenenfalls Zusatzstoffe enthält. Die in der umhüllenden Schicht vorhandenen Komponenten können zum Teil auch in Einbuchtungen im Trägermaterial eindringen.

In den erfindungsgemäßen Kombinations-Trägergranulaten können die prozentualen Anteile der enthaltenen Komponenten innerhalb größerer Bereiche variiert werden. Der Anteil an Trägermaterial liegt im allgemeinen zwischen 50 und 98 Gew.-%, vorzugsweise zwischen 60 und 92 Gew.-%. Der Anteil an flüssigen wie auch an festen bioziden Wirkstoffen beträgt im allgemeinen zwischen 0,1 und 20 Gew.-%, vorzugsweise zwischen 0.5 und 15 Gew.-%. Der Anteil an dem als Bindemittel fungierenden Gemisch aus Polyvinylacetat und Polyvinylalkohol liegt im allgemeinen zwischen 0,1 und 4 Gew.-%, vorzugsweise zwischen 0,3 und 3 Gew.-%, wobei auf 1 Teil Polyvinylacetat im allgemeinen 0,05 bis 0,25 Gewichtsteile. vorzugsweise 0,1 bis 0,2 Gewichtsteile an Polyvinylalkohol entfallen. Zusatzstoffe sind gegebenenfalls in Anteilen von 1 bis 40 Gewichtsteilen, vorzugsweise von 2 bis 30 Gewichtsteilen enthalten.

Bei der Herstellung der erfindungsgemäßen Kombinations-Trägergranulate können vorzugsweise alle diejenigen Komponenten verwendet werden, die bereits im Zusammenhang mit der Beschreibung der erfindungsgemäßen Kombinations-Trägergranulate vorzugsweise genannt wurden.

Bei der Herstellung der erfindungsgemäßen Granulate ist es erforderlich. die festen bioziden Wirkstoffe in fein verteilter Form einzusetzen. Dazu werden die bei Raumtemperatur festen bioziden Wirkstoffe im allgemeinen, gegebenenfalls im Gemisch mit Mahlhilfsmitteln. in fein gemahlenem Zustand verwendet. Die

bei Raumtemperatur flüssigen bioziden Wirkstoffe werden im allgemeinen im Gemisch mit Streckmitteln, wie Attapulgit. Montmorillonit, Sepiolith oder hochdisperser Kieselsäure. verwendet. Es ist jedoch auch möglich. ein Gemisch aus flüssigen und festen bioziden Wirkstoffen. gegebenenfalls im Gemisch mit Mahlhilfsmitteln. in fein verteiltem Zustand einzusetzen.

Das als Bindemittel (Kleber) fungierende Gemisch aus Polyvinylacetat und Polyvinylalkohol wird in Form einer wäßrigen Dispersion eingesetzt. Als Verdünnungsmittel kommen hierbei neben Wasser auch organische Solventien in Frage, vorzugsweise niedrig siedende organische Lösungsmittel, wie Methanol, Ethanol, Butanol und Methylenchlorid.

Bei der Durchführung des erfindungsgemäßen Verfahrens geht man im allgemeinen so vor, daß man

- körniges Trägermaterial mit kompakter Oberfläche in einen Mischer gibt und unter ständigem Mischen mit einer wäßrigen Dispersion von Polyvinylacetat und Polyvinylalkohol besprüht,
- dann
  entweder nacheinander mit mindestens einem festen bioziden Wirkstoff, gegebenenfalls im Gemisch mit Zusatzstoffen, und mit mindestens einem flüssigen bioziden Wirkstoff, gegebenenfalls im Gemisch mit Zusatzstoffen, versetzt,
  oder ein Gemisch aus mindestens einem festen bioziden Wirkstoff und mindestens einem flüssigen bioziden Wirkstoff, gegebenenfalls im Gemisch mit Zusatzstoffen, zugibt,
  gegebenenfalls erneut mit einer wäßrigen Dispersion von Polyvinylacetat und Polyvinylalkohol besprüht und
- die so erhaltenen körnigen Produkte trocknet.

Die Reihenfolge, in der die Komponenten auf das Trägermaterial aufgebracht werden, kann in der jeweils gewünschten Weise variiert werden.

Das erfindungsgemäße Verfahren wird im allgemeinen bei Raumtemperatur durchgeführt. Es ist jedoch auch möglich. bei etwas erhöhter Temperatur zu arbeiten.

Die Trocknungstemperatur kann innerhalb eines größeren Bereiches variiert werden. Im allgemeinen trocknet man bei Granulat- Temperaturen zwischen 20 °C und 70 °C, vorzugsweise zwischen 30 °C und 65 °C. Die Trocknung kann gegebenenfalls unter vermindertem Druck vorgenommen werden. Ferner kann die Trocknung entweder in dem zur Beschichtung des Trägermaterials dienenden Mischer oder aber in einer separaten Trocknungsapparatur erfolgen.

Das erfindungsgemäße Verfahren kann entweder diskontinuierlich oder kontinuierlich in üblichen Apparaturen durchgeführt werden.

Die erfindungsgemäßen Kombinations-Trägergranulate lassen sich je nach den enthaltenen aktiven Komponenten für verschiedenste Zwecke einsetzen. So lassen sie sich z.B. zur Bekämpfung von tierischen Schädlingen. Pilzen und/oder Unkraut verwenden. Sind Pflanzenwachstumsregulatoren enthalten, so können sie auch zur Beeinflussung des Wachstums von Kulturpflanzen eingesetzt werden.

Die erfindungsgemäßen Kombinations-Trägergranulate können nach üblichen Methoden, wie z.B. Streuen. ausgebracht werden.

Die Herstellung der erfindungsgemäßen Kombinations-Trägergranulate geht aus den folgenden Beispielen hervor.

## Herstellungsbeispiele

### Vergleichsbeispiel:

In einem Mischer werden 176,94 g Quarzsandkörner mit einem Durchmesser von 0,4 bis 0,8 mm unter ständigem Mischen bei Raumtemperatur mit einer wäßrigen Dispersion besprüht, die 1,6 g Polyvinylacetat enthält. Danach werden bei Raumtemperatur 13,86 g einer handelsüblichen fein gemahlenen pulvrigen Mischung, die 10,47 g an 2,3-Dihydro-2,2-dimethyl-7-benzofuranyl-N-methyl-carbamat der Formel

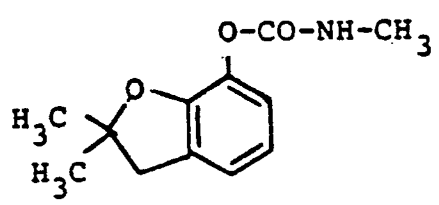

(1)

enthält, sowie 0,6 g blauer Farbstoff und 7 g einer Mischung, die zu 65,21 Gewichtsprozent aus O-Ethyl-O-(2-isopropyloxycarbonyl-phenyl)-N-isopropyl-th ionophosphorsäureesteramid der Formel

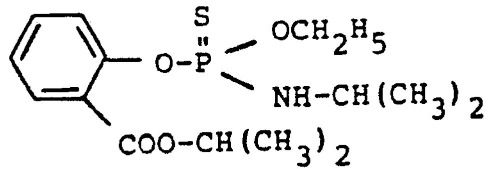

(2)

und zu 34,79 Gewichtsprozent aus hochdisperser Kieselsäure besteht, zugegeben. Man mischt weitere 10 Minuten bei Raumtemperatur und trocknet dann in dem Mischer bei einer Trockengut-Temperatur von maximal 60° C. Man erhält auf diese Weise 200 g Kombinations-Trägergranulat mit einem Gehalt von
5,2 Gewichtsprozent an Wirkstoff der Formel (1) und
2.1 Gewichtsprozent an Wirkstoff der Formel (2).

Das erhaltene Granulat zeigte einen starken Abrieb und Erweichung, so daß es für eine praktische Verwendung nicht geeignet war.

Beispiel 1

In einem Mischer werden 88.8 kg Quarzsand-körner mit einem Durchmesser von 0,3 bis 0,7 mm unter ständigem Mischen bei Raumtemperatur mit 3.34 kg einer wäßrigen Dispersion besprüht, die 0,8 kg Polyvinylacetat und 0.1 kg Polyvinylalkohol enthält. Danach werden bei Raumtemperatur 6,62 kg einer handelsüblichen fein gemahlenen pulvrigen Mischung, die 5 kg an 2,3-Dihydro-2,2-dimethyl-7-benzofuranyl-N-methyl-carbamat der Formel

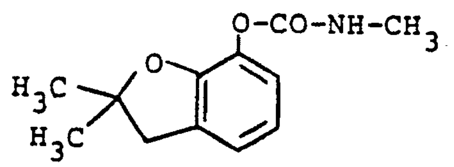

(1)

enthält, sowie eine Mischung aus 2 kg O-Ethyl-O-(2-isopropyloxycarbonyl-phenyl)-N-isopropylthionophosphorsäureesteramid der Formel

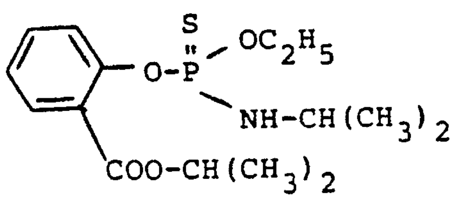

(2)

0,37 kg blauem Farbstoff und 0,37 kg hochdisperser Kieselsäure zugegeben. Man mischt weitere 10 Minuten bei Raumtemperatur und trocknet dann in dem Mischer bei einer Trockengut-Temperatur von maximal 60° C. Man erhält auf diese Weise 100 kg Kombinations-Trägergranulat mit einem Gehalt von 5 Gew.-% an Wirkstoff der Formel (1) und 2 Gew.-% an Wirkstoff der Formel (2).

Das Granulat zeichnet sich durch hohe Abriebfestigkeit aus.

Beispiel 2

In einem Mischer werden 90,1 kg Quarzsand-Körner mit einem Durchmesser von 0,3 bis 0,7 mm unter ständigem Mischen bei Raumtemperatur mit 3,34 kg einer wäßrigen Dispersion besprüht, die 0,75 kg Polyvinylacetat und 0,15 kg Polyvinylalkohol enthält. Danach werden bei Raumtemperatur 5,3 kg einer handelsüblichen fein gemahlenen pulvrigen Mischung, die 4 kg an 2,3-Dihydro-2,2-dimethyl-7-benzofuranyl-N-methyl-carbamat der Formel

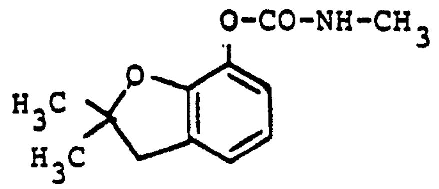

(1)

enthält, sowie eine Mischung aus 2 kg O-Ethyl-O-(2-isopropyloxycarbonyl-phenyl)-N-isopropylthionophosphorsäureesteramid der Formel

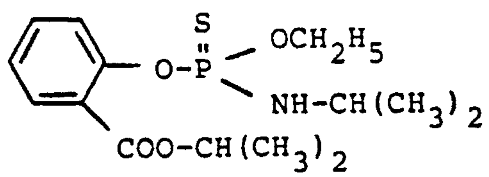

(2)

0,37 kg blauem Farbstoff und 1,34 kg hochdisperser Kieselsäure zugegeben. Man mischt weitere 10 Minuten bei Raumtemperatur und trocknet dann in dem Mischer bei einer Trockengut-Temperatur von maximal 60°C. Man erhält auf diese Weise 100 kg Kombinations-Trägergranulat mit einem Gehalt von 4 Gew.-% an Wirkstoff der Formel (1) und 2 Gew.-% an Wirkstoff der Formel (2).

Das Granulat zeichnet sich durch eine hohe Abriebfestigkeit aus.

## Ansprüche

1. Kombinations-Trägergranulate, dadurch gekennzeichnet, daß sie
   - körniges Trägermaterial mit kompakter Oberfläche und
   - eine Hüllschicht aus
     - mindestens einem festen bioziden Wirkstoff,
     - minestens einem flüssigen bioziden Wirkstoff,
     - Polyvinylacetat und Polyvinylalkohol
     - sowie gegebenenfalls Zusatzstoffen enthalten.

2. Kombinations-Trägergranulate gemäß Anspruch 1, dadurch gekennzeichnet, daß sie Carbamate als feste biozide Wirkstoffe enthalten.

3. Kombinations-Trägergranulate gemäß Anspruch 1. dadurch gekennzeichnet, daß sie Phosphorsäure-Derivate als flüssige biozide Wirkstoffe enthalten.

4. Kombinations-Trägergranulate gemäß Anspruch 1. dadurch gekennzeichnet, daß sie 2,3-Dihydro-2,2-dimethyl-7-benzofuranyl-N-methyl-carbamat als festen bioziden Wirkstoff enthalten.

5. Kombinations-Trägergranulate gemäß Anspruch 1. dadurch gekennzeichnet, daß sie O-Ethyl-O-(2-isopropyloxycarbonylphenyl)-N-isopropyl-thionophosphorsäureester-amid als flüssigen bioziden Wirkstoff enthalten.

6. Kombinations-Trägergranulate gemäß Anspruch 1. dadurch gekennzeichnet, daß sie 0,1 bis 20 Gew.-% an bioziden Wirkstoffen enthalten.

7. Kombinations-Trägergranulate gemäß Anspruch 1. dadurch gekennzeichnet, daß sie Streckmittel, Mahlhilfsmittel, Farbstoffe, Wasser und/oder organische Solventien als Zusatzstoffe enthalten.

**8.** Verfahren zur Herstellung von Kombinations-Trägergranulaten, dadurch gekennzeichnet, daß man
- körniges Trägermaterial mit kompakter Oberfläche in einem Mischer mit einer wäßrigen Dispersion von Polyvinylacetat und Polyvinylalkohol besprüht,
- dann mit mindestens einem festen bioziden Wirkstoff, mindestens einem flüssigen bioziden Wirkstoff, gegebenenfalls Zusatzstoffen und gegebenenfalls einer wäßrigen Dispersion von Polyvinylacetat und Polyvinylalkohol besprüht und .
- die so erhaltenen körnigen Produkte trocknet.

**9.** Verwendung von Kombinations-Trägergranulaten gemaß Anspruch 1 in der Landwirtschaft und im Gartenbau. dadurch gekennzeichnet, daß man die Kombinations-Trägergranulate auf die Pflanzen und /oder deren Lebensraum ausbringt.

**Claims**

**1.** Combination carrier granules, characterised in that they contain granular carrier material with a compact surface, and an enveloping layer of at least one solid biocidal active compound, at least one liquid biocidal active compound, polyvinyl acetate and polyvinyl alcohol and, if appropriate, additives.

**2.** Combination carrier granules according to Claim 1, characterised in that they contain carbamates as the solid biocidal active compounds.

**3.** Combination carrier granules according to Claim 1, characterised in that they contain phosphoric acid derivatives as the liquid biocidal active compounds.

**4.** Combination carrier granules according to Claim 1, characterised in that they contain 2,3-dihydro-2,2-dimethyl-7-benzofuranyl N-methyl-carbamate as the solid biocidal active compound.

**5.** Combination carrier granules according to Claim 1, characterised in that they contain O-ethyl O-(2-isopropoxycarbonylphenyl) N-isopropyl-thionophosphoric acid esteramide as the liquid biocidal active compound.

**6.** Combination carrier granules according to Claim 1, characterised in that they contain 0.1 to 20% by weight of biocidal active compounds.

**7.** Combination carrier granules according to Claim 1, characterised in that they contain extenders, grinding auxiliaries, dyestuffs, water and/or organic solvents as additives.

**8.** Process for the preparation of combination carrier granules, characterised in that granular carrier material with a compact surface is sprayed with an aqueous dispersion of polyvinyl acetate and polyvinyl alcohol in a mixer and then sprayed with at least one solid biocidal active compound, at least one liquid biocidal active compound, if appropriate additives and if appropriate an aqueous dispersion of polyvinyl acetate and polyvinyl alcohol, and the granular products thus obtained are dried.

**9.** Use of combination carrier granules according to Claim 1 in agriculture and in horticulture, characterised in that the combination carrier granules are applied to the plants and/or their environment.

**Revendications**

**1.** Granulés de support de combinaison **caractérisés en ce qu'**ils contiennent :
- une matière de support granuleuse présentant une surface compacte et
- une couche enveloppante constituée de
  - au moins une substance active biocide solide,
  - au moins une substance active biocide liquide,
  - de l'acétate de polyvinyle et de l'alcool polyvinylique,
  - ainsi qu'éventuellement des additifs.

**2.** Granulés de support de combinaison selon la revendication 1, **caractérisés en ce qu'**ils contiennent des carbamates comme substances actives biocides solides.

3. Granulés de support de combinaison selon la revendication 1, **caractérisés en ce qu'**ils contiennent des dérivés de l'acide phosphorique comme substances actives biocides liquides.

4. Granulés de support de combinaison selon la revendication 1, **caractérisés en ce qu'**ils contiennent le 2,3-dihydro-2,2-diméthyl-7-benzofuranyl-N-méthyl-carbamate comme substance active biocide solide.

5. Granulés de support de combinaison selon la revendication 1, **caractérisés en ce qu'**ils contiennent l'esteramide O-éthyl-O-(2-isopropyloxycarbonylphényl)-N-isopropylthionophosphate comme substance active biocide liquide.

6. Granulés de support de combinaison selon la revendication 1, **caractérisés en ce qu'**ils contiennent 0,1 à 20 % en poids de substances actives biocides.

7. Granulés de support de combinaison selon la revendication 1, **caractérisés en ce qu'**ils contiennent des diluants, des agents auxiliaires de broyage, des colorants, de l'eau et/ou des solvants organiques, comme additifs.

8. Procédé pour la préparation de granulés de support de combinaison, **caractérisé en ce qu'**on
   - asperge une matière de support granuleuse présentant une surface compacte, dans un mélangeur, avec une dispersion aqueuse d'acétate de polyvinyle et d'alcool polyvinylique ;
   - ensuite, on asperge avec au moins une substance active biocide solide, au moins une substance biocide liquide, éventuellement des additifs et éventuellement une dispersion aqueuse d'acétate de polyvinyle et d'alcool polyvinylique et
   - on sèche les produits granuleux ainsi obtenus.

9. Utilisation de granulés de support de combinaison selon la revendication 1, dans l'agriculture et dans le jardinage, **caractérisée en ce qu'**on répand les granulés de support de combinaison sur les plantes et/ou au sein de leur biotope.